Europäisches Patentamt

European Patent Office

Office européen des brevets

(19)

(11) Publication number: **0 275 041**
**A2**

# (12) EUROPEAN PATENT APPLICATION

(21) Application number: **88100166.3**

(22) Date of filing: **08.01.88**

(51) Int. Cl.4: **G11B 20/10** , G11B 5/008 , G11B 20/22 , G11B 20/06 , //H04N5/782

(30) Priority: **09.01.87 JP 1611/87**
**20.05.87 JP 121297/87**

(43) Date of publication of application:
**20.07.88 Bulletin 88/29**

(84) Designated Contracting States:
**DE GB**

(71) Applicant: **HITACHI, LTD.**
**6, Kanda Surugadai 4-chome Chiyoda-ku Tokyo 100(JP)**

Applicant: **Hitachi Video Engineering, Incorporated**
**292, Yoshidacho, Totsuka-ku Yokohama-shi Kanagawa-ken(JP)**

(72) Inventor: **Kobayashi, Masaharu**
**1-10-803, Oimatsucho**
**Hiratsuka-shi(JP)**
Inventor: **Arai, Takao**
**65-24, Ibukino**
**Midori-ku Yokohama(JP)**
Inventor: **Yumde, Yasufumi**
**1257-1, Yoshidacho**
**Totsuka-ku Yokohama(JP)**
Inventor: **Uto, Kazuo**
**Sanseiryo 1557-21, Miyahara**
**Takaba Katsuta-shi(JP)**
Inventor: **Amada, Nobutaka**
**Hachimanyama Apartment 552 1545, Yoshidacho**
**Totsuka-ku Yokohama(JP)**
Inventor: **Toeda, Hiroshi**
**1181-22, Higashiishikawa**
**Katsuta-shi(JP)**
Inventor: **Zama, Hideo**
**Yorii Apartment 512 391-2, Tabiko**
**Katsuta-shi(JP)**
Inventor: **Masuda, Michio**
**Yorii Apartment 544 391-2, Tabiko**
**Katsuta-shi(JP)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Galileiplatz 1**
**Postfach 86 06 20**
**D-8000 München 86(DE)**

EP 0 275 041 A2

(54) **Multiplex magnetic recording and reproducing apparatus of the rotary head type.**

(57) In a helical scan type magnetic recording and reproducing apparatus using rotary heads, magnetic heads (22a and 22b) for FM audio signals, magnetic heads (23a and 23b) for PCM audio signals, and magnetic heads (24a and 24b) for a video signal are arranged on a cylinder, respectively. The FM audio magnetic heads (22a and 22b), the PCM audio magnetic heads (23a and 23b), and the video signal magnetic heads (24a and 24b) have mutually different azimuth angles, respectively. The FM audio signals are first recorded in a deep layer (39) of a magnetic tape (26) by the FM audio heads, the digital modulation signals of the PCM audio signals are then recorded in an intermediate layer (40) by the PCM audio heads, and the video signal is finally recorded in a surface layer (41) by the video signal heads. Upon recording, the FM carrier frequency of the audio signals and the digital modulation carrier frequency of the PCM audio signals are set to frequencies lower than the frequency band of the FM luminance signal in the video signal. The Offset Quadrature Differential Phase-Shift Keying (O-QDPSK) modulation is used as a method of digitally modulating the PCM audio signals.

FIG. 1

## MULTIPLEX MAGNETIC RECORDING AND REPRODUCING APPARATUS OF THE ROTARY HEAD TYPE

### BACKGROUND OF THE INVENTION

The present invention relates to a magnetic recording and reproducing system for high quality audio signals which is compatible with existing magnetic recording and reproducing apparatuses (hereinafter, abbreviated to video tape recorders or VTR).

Hitherto, for example, as disclosed in JP-A-61-145701, a VTR uses what is called a shallow layer recording system in which audio PCM signals are recorded after a video signal was recorded. Therefore, there are problems such that the video signal deteriorates and recording currents of the audio PCM signals must be controlled to reduce such a deterioration.

Further, as a VTR for recording and reproducing a video signal and digital signals, as disclosed in, e.g., JP-A-59-218606 and JP-A-59-221802, there are VTRs using a system in which guard bands are provided for video signal tracks and the digital signals are recorded in these areas. However, a compatibility with the existing VTR is not obtained. On the other hand, a technique to record and reproduce audio PCM signals together with a video signal has been set forth by the same inventors as the present invention, i.e., Takao Arai, Takaharu Noguchi, Masaharu Kobayashi, Nobutaka Amada, Yasufumi Yumde, and Kuniaki Miura in, "A STUDY ON THE DIGITIZATION OF AUDIO SIGNALS FOR VIDEO TAPE RECORDER", ICASSP 86, April, 1986. The same technique as the above technique has already been applied to U.S. Patent Office by Nobutaka Amada, Takaharu Noguchi, Hiroyuki Kimura, Masaharu Kobayashi, Takao Arai, Yasufumi Yumde, and Kuniaki Miura in "MODULATOR/DEMODULATOR FOR OFFSET QUADRATURE DIFFERENTIAL PHASE-SHIFT KEYING", Serial No. 872,902, filed on June 11, 1986. Further, a technique to magnetically record and reproduce a video signal and FM audio signals has been published by Kuniaki Miura, Yoshinori Okada, Isao Fukushima, Naoto Yoshida, and Masaaki Hirano in "HiFi VCR SYSTEM", IEEE Trans., on CE, Vol. CE-30, No. 3, August, 1984.

However, in the above-mentioned references, nothing is considered with respect to a technique for simultaneously recording and reproducing a video signal, FM audio Signals, and PCM audio signals.

### SUMMARY OF THE INVENTION

It is an object of the present invention to provide a magnetic recording and reproducing method whereby audio signals can be recorded and reproduced while hardly interfering with a video signal.

Another object of the invention is to provide method and apparatus for magnetically recording and reproducing high quality audio signals in which a compatibility with the existing VTR is held.

Still another object of the invention is to provide method and apparatus for magnetically recording and reproducing PCM audio signals in which a compatibility with the existing HiFi VTR of the VHS system is held and a coexistence with the FM audio signals is obtained.

To accomplish the above object, according to the invention, a VTR for multiplex recording a video signal and audio signals on the same track comprises means for frequency modulating the audio signals, means for digitally modulating the audio signals, and a plurality of recording and reproducing means for respectively recording and reproducing the video signal, frequency modulation audio signals, and digital modulation audio signals, wherein the FM audio signals and the digital modulation audio signals are frequency multiplexed under the band which is occupied by a modulating luminance signal of the video signal by use of the frequency modulating means and the digital modulating means, and the FM audio signals are recorded into the deep layer and the digital modulation audio signals are then recorded into the intermediate layer by the respective corresponding recording and reproducing means, and further, the video signal is recorded into the surface layer. Preferably, the azimuth angles of the recording and reproducing means for the video signal, FM audio signals, and digital modulation signals are set to the different values and these signals are multiplex recorded into a magnetic tape.

Further, in this invention, the recording and reproducing means for each of the signals is constituted by at least a pair of magnetic heads having different polarities of the azimuth angles. Namely, the recording and reproducing means are constituted by at least: a first group of a pair of magnetic heads each having a first azimuth angle and whose polarities are different; a second group of a pair of magnetic heads each having a second azimuth different from the first azimuth angle and whose polarities are different; and a third group of a pair of magnetic heads each having a third azimuth angle different from the first and second azimuth angles and whose polarities are different. Most of the tracks recorded by the first magnetic head group are overlapping recorded by the second magnetic head group. Most of the tracks recorded by the first and second magnetic head groups are overlappingly recorded by the third magnetic head group.

Further, according to the invention, in the first mode, the polarity of the first azimuth angle of the first magnetic heads and the polarity of the third azimuth angle of the third magnetic heads are different in most of the overlap recorded portions. In the second mode, the polarity of the first azimuth angle of the first magnetic heads and the polarity of the third azimuth angle of the third magnetic heads are coincident in most of the overlap recorded portions. Further, according to the invention, the frequency modulation audio signals are recorded by the first magnetic head group, the digital modulation audio signals are recorded by the second magnetic head group, and the video signal is recorded by the third magnetic head group.

BRIEF DESCRIPTION OF THE DRAWINGS

Fig. 1 is a block diagram showing a whole constitution of an embodiment of a magnetic recording and reproducing apparatus according to the present invention;

Fig. 2 is a schematic diagram for explaining the recording by magnetic recording and reproducing means of the magnetic recording and reproducing apparatus in the embodiment shown in Fig. 1;

Figs. 3A, 3B, and 3C are frequency spectrum diagrams of signals which are recorded/reproduced by the magnetic recording and reproducing apparatus in the embodiment shown in Fig. 1;

Figs. 4A and 4B are schematic diagrams showing recording track patterns on a magnetic tape in the magnetic recording and reproducing apparatus in the embodiment shown in Fig. 1;

Fig. 5 is a schematic diagram showing an arrangement of magnetic head groups attached on a cylinder of the magnetic recording are reproducing apparatus in the embodiment shown in Fig. 1;

Fig. 6 is a schematic diagram showing a positional relation among the magnetic head groups in the magnetic recording and reproducing a apparatus in the embodiment shown in Fig. 1;

Fig. 7 is a frequency characteristic diagram showing crosstalks of the PCM audio signals to the FM audio signals and video signal in the SP mode in the magnetic recording and reproducing apparatus in the embodiment shown in Fig. 1;

Fig. 8 is a characteristic diagram showing crosstalks in the EP mode in the magnetic recording and reproducing apparatus in the embodiment shown in Fig. 1;

Figs. 9 to 12 are frequency characteristic diagrams showing respective crosstalks of the PCM audio signals to the video signal and the FM audio signals in each of the SP mode and EP mode in the magnetic recording and reproducing apparatus in the embodiment shown in Fig. 1;

Fig. 13 is a schematic diagram showing a track format on the tape in the embodiment shown in Fig. 1;

Figs. 14A to 14D are schematic diagrams for explaining signal recording states in the embodiment shown in Fig. 1;

Figs. 15A and 15B are schematic diagrams showing other embodiments of an arrangement of the magnetic heads attached on the cylinder in the magnetic recording and reproducing apparatus shown in Fig. 1;

Figs. 16 and 17 are schematic diagrams showing results of the recording according to the arrangements of the magnetic heads shown in Figs. 15A and 15B;

Fig. 18 is a block diagram showing an embodiment of an audio output signal selecting circuit in the invention;

Figs. 19, 20A, and 20B are block diagrams showing other embodiments of an audio output signal selecting circuit in the invention;

Fig. 21 is a block diagram showing an embodiment of a PCM audio signal recording and reproducing processor in the invention;

Fig. 22 is a constitutional diagram of a data block of PCM audio signals which are recorded by the magnetic recording and reproducing apparatus in the invention;

Fig. 23 is a circuit block diagram showing a practical example of an O-QDPSK modulator to digitally modulate PCM audio signals in the invention;

Fig. 24 is a waveform diagram showing signal waveforms in the main sections in the circuit shown in Fig. 23;

Fig. 25 is a circuit block diagram showing a practical example of an O-QDPSK demodulator to digitally demodulate PCM audio signals in the invention; and

Fig. 26 is a diagram showing signal waveforms in the main sections in the circuit shown in Fig. 25.

## DESCRIPTION OF THE PREFERRED EMBODIMENTS

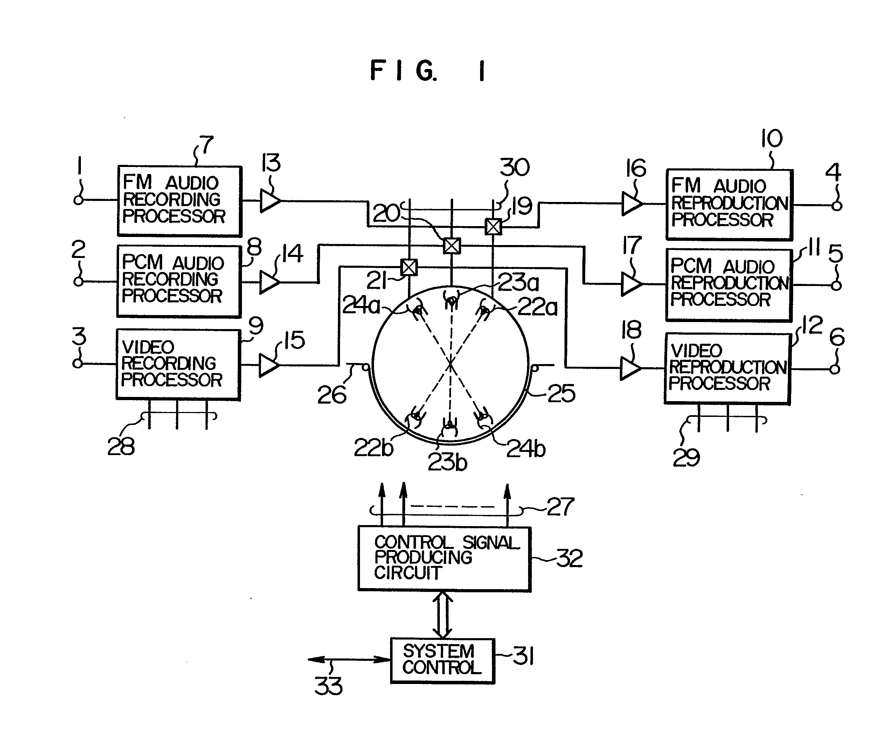

An embodiment of the present invention will be described hereinbelow with reference to Fig. 1. In the recording mode, FM recording audio signals are input from an input terminal 1 and frequency modulated by an FM audio recording processor 7 and amplified by an FM audio recording amplifier 13. The amplified FM audio signals are input to a recording/reproduction switching device 19. The switching device 19 is switched to the recording mode by a recording/reproduction control signal 30. The audio signals are input to FM audio heads 22 (22a and 22b) and recorded to a magnetic tape 26.

PCM recording audio signals are input from an input terminal 2 and converted into digital signals by PCM audio recording processor 8. These digital signals are subjected to an error correction code encoding process and an interleaving process and then subjected to a formating process to add control signals and sync signals. Thereafter, the processed signals are modulated. Outputs of the process 8 are amplified by a PCM audio signal recording amplifier 14 and input to a recording/reproduction switching device 20. The switching device 20 is switched to the recording mode by the control signal 30. The PCM audio signals are then input to PCM audio heads 23 (23a and 23b) and recorded to the tape 26.

A video signal is input from an input terminal 3 and subjected to a recording signal converting process by a video signal recording processor 9 and amplified by a video signal recording amplifier 15. The amplified signal is input to a recording/reproduction switching device 21. The switching device 21 is switched to the recording mode by the control signal 30. The video signal is then input to video signal heads 24 (24a and 24b) and recorded to the tape 26.

In the reproduction mode, the signals recorded on the tape 26 are read out by the heads 22, 23, and 24. The outputs of the heads are input to the head switching devices 19, 20, and 21. Each switching device is switched to the reproducing mode by the control signal 30. These outputs are input to an FM audio signal reproduction amplifier 16, a PCM audio signal reproduction amplifier 17, and a video signal reproduction amplifier 18 and amplified, respectively. The amplified outputs of the amplifiers 16, 17, and 18 are subjected to a reproducing process by an FM audio reproduction processor 10, a PCM audio processor 11, and a video signal processor 12, respectively. The processed signals are output from output terminals 4, 5, and 6, respectively.

Control signals 28 for the recording processors 7, 8, and 9, control signals 29 for the reproduction processors 10, 11, and 12, the switching control signals 30 for the switching devices 19, 20, and 21, and the like are connected to a group of control signals 27 which are produced and output from a control signal producing circuit 32. Further, the producing circuit 32 is connected to a system control circuit 31 and controlled by a control signal 33. Each of the processors 7 to 12 is the well-known circuit block.

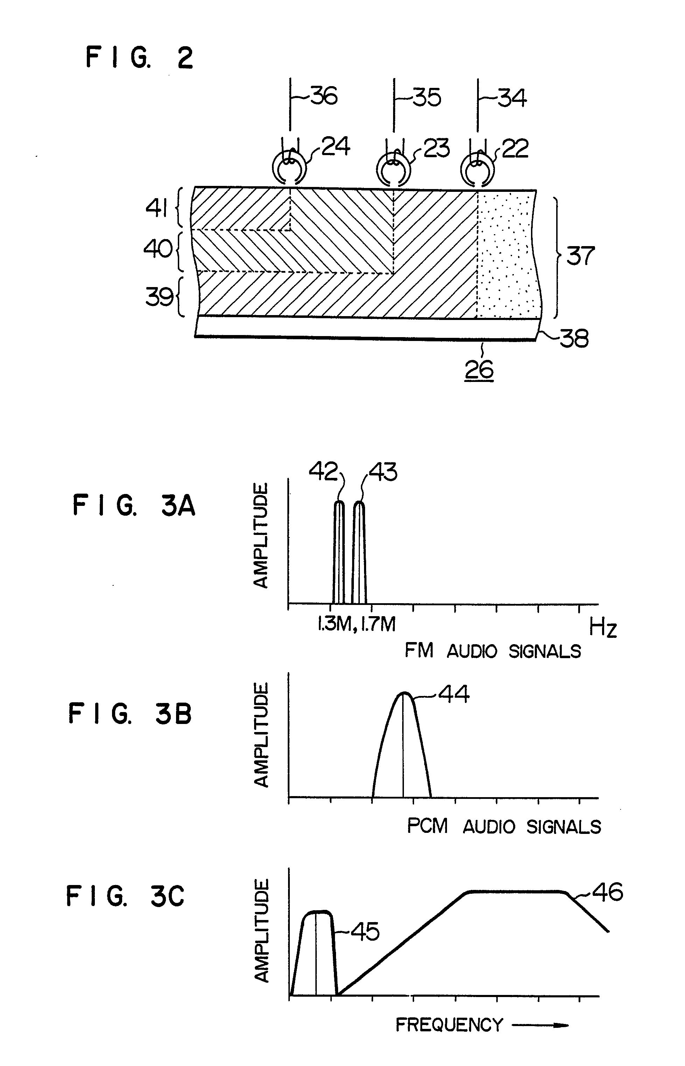

Fig. 2 shows a recording pattern diagram for explaining the recording onto a magnetic medium by the heads 22, 23, and 24 in Fig. 1. Namely, this diagram shows recording patterns in the depth direction of the magnetic tape 26 which are formed by FM audio recording signals 34, PCM audio recording signals 35, and a video recording signal 36 by use of the FM audio heads 22, PCM audio heads 23, and video heads 24 attached on a cylinder 25. The magnetic tape 26 consists of a base film portion 38 and a magnetic material portion 37.

For recording, the FM audio recording signals 34 are first recorded by the FM audio heads 22. In the case of the FM audio recording signals 34, for example, the carrier frequencies are 1.3 MHz and 1.7 MHz and the frequency deviation is about 150 kHz. The FM audio recording signals 34 are recorded to the deep layer portion of the magnetic material. In Fig. 2, the FM audio recording signals 34 are recorded until the surface of the base film 38; however, there is also a case where a deep layer portion 39 is not formed until the surface of the base film 38 of the magnetic material 37. Next, the PCM audio recording signals 35 are recorded by the PCM audio heads 23. The PCM audio recording signals 35 are the PSK modulation signals in which, for example, the carrier frequencies are 2 to 3.5 MHz which are higher than those of the FM audio recording signals 34 and the Nyquist band is 1.3 MHz. The deep layer recorded portion 39 of the FM audio recording signals 34 is left and the other portion is rerecorded by the PCM audio recording signals 35.

The video recording signal 36 is then recorded by the video signal heads 24. An intermediate layer recorded portion 40 of the PCM audio recording signals 35, namely, the deep layer portion 40 of the magnetic material 37 is left and the other upper portion 41 is rerecorded by the video recording signals 36. By the foregoing recording system, the FM audio recording signals 34, PCM audio recording signals 35, and video recording signal 36 can be recorded as a three-layer structure consisting of the deep layer portion 39, intermediate layer portion 40, and surface layer portion 41 in the depth direction of the magnetic material 37 by the FM audio recording signals 34, PCM audio recording signals 35, and video recording signal 36, respectively.

According to this recording system, by setting the frequency in the luminance signal portion of the video signal to a high frequency, there is an effect such that, in particular, an amount of PCM audio signals which will be erased by the video signal can be reduced. In this case, the PCM audio signals are erased by the video signal. Next, although the FM audio signals are erased by the PCM audio signals and video signal. The PCM audio signals include a lot of lower frequency components than those of the video signal. Therefore, most of the FM audio signals to be erased are erased by the PCM audio signals.

In this case, as compared with the case where the video signal frequency assumes 4 MHz and the FM audio signals were erased by this video signal frequency, when the FM audio signals were erased by assuming that the carrier frequencies of the PCM audio signals are 2.5 to 3 MHz, the S/N ratio of the reproduced signal deteriorates by 3 to 5 dB. However, the enough high performance is obtained as the FM audio signals.

Each of the FM audio recording signal level, PCM audio recording signal level, and video recording signal level is set to, for example, the optimum recording current (ORC) value. In another embodiment, the PCM audio recording signal level is set to the optimum value in consideration of the reproduction output of the FM audio recording signals. The video recording signal level is set to the optimum value in consideration of the reproduction output of the PCM audio recording signals.

The azimuth angles of the heads for recording and reproducing the video signal are set to, e.g., ± 6°. The azimuth angles of the heads for recording and reproducing the FM audio signals are set to, e.g., ± 30°. These azimuth angles are the same as those in the standards in the VHS system VTR. The azimuth angles of the heads for recording and reproducing the PCM audio signals are set to values smaller than ± 6°, values larger than ± 6° and smaller than ± 30°, or values larger than ± 30° and smaller than ± 90°. For example, they are set to ± 18°, ± 60°, or values near them.

Further, according to the VHS HiFi system VTR, in the case of the NTSC system, there are three kinds of recording modes: a normal recording mode (SP); a 1/2-speed recording mode (LP); and a 1/3-speed recording mode (EP). In general, two kinds of SP and EP recording modes are used. On the other hand, in the case of the CCIR system, there are two kinds of SP and LP recording modes.

In the SP mode in the NTSC system, the azimuth angles of the heads for the FM audio signals and the azimuth angles of the heads for the video signal are set to a combination of +30° and -6° and a combination of -30° and +6°, respectively. In the EP mode in the NTSC system, they are set to a combination of +30° and +6° and a combination of -30° and -6°. To obtain the compatibility with these existing systems, the azimuth angles in the apparatus in this invention need to be coincident with those combinations. This point will be again explained hereinlater with respect to practical examples.

Figs. 3A, 3B, and 3C show frequency spectrum diagrams of the recording signals. Fig. 3A relates to the FM audio recording signals 34 consisting of FM modulation signals 42 and 43 of two channels. For example, the carrier frequency of the signal 42 is 1.3 MHz and the carrier frequency of the signal 43 is 1.7 MHz. Fig. 3B relates to the PCM audio recording signals 35 consisting of a signal 44 which was offset quadrature differential phase-shift keying (O-QDPSK) modulated. The O-QDPSK modulation is disclosed in detail in, for example, U.S. Patent Serial No. 872,902, Amada et al., "Modulator/Demodulator For Offset Quadrature Differential Phase-Shift Keying", which has been applied by the same applicant as the present invention. Fig. 3C relates to the video signal 36 consisting of a low frequency band converted prominence signal 45 and a frequency modulated luminance signal 46. By sequentially recording the three kinds of signals of the frequency spectra as shown in Figs. 3A to 3C in accordance with the order from the signal mainly having low frequency components, i.e., from the signal having a long wavelength, in the recorded layer formed by each of the recording signals, the region from which the recorded signals are not erased in the depth direction of the magnetic layer is left. In this case, on the basis of the depth of the recording signal to the wavelength, the optimum recording current (ORC) value to the wavelength, the gap of recording head to the wavelength, and the like, the FM audio signals 34 are deeply recorded and the PCM audio signals 35 are recorded by rewriting the portion other than the deep layer portion in which the FM audio signals 34 have already been recorded. Finally, the video signal 36 is recorded by rewriting the upper portion while leaving the partial intermediate layer portion in which the PCM audio signals 35 were recorded.

In the reproducing mode, the PCM audio signals 35 lose the recorded signals by the amount corresponding to the region in which the video signal 36 was recorded. The FM audio signals 34 lose the recorded signals by the amount corresponding to the regions where the video signal 36 and PCM audio signals 35 were recorded. However, in this case, the FM audio signals 34 and PCM audio signals 35 are sequentially recorded and arranged so that the influences by the foregoing signal loses are small.

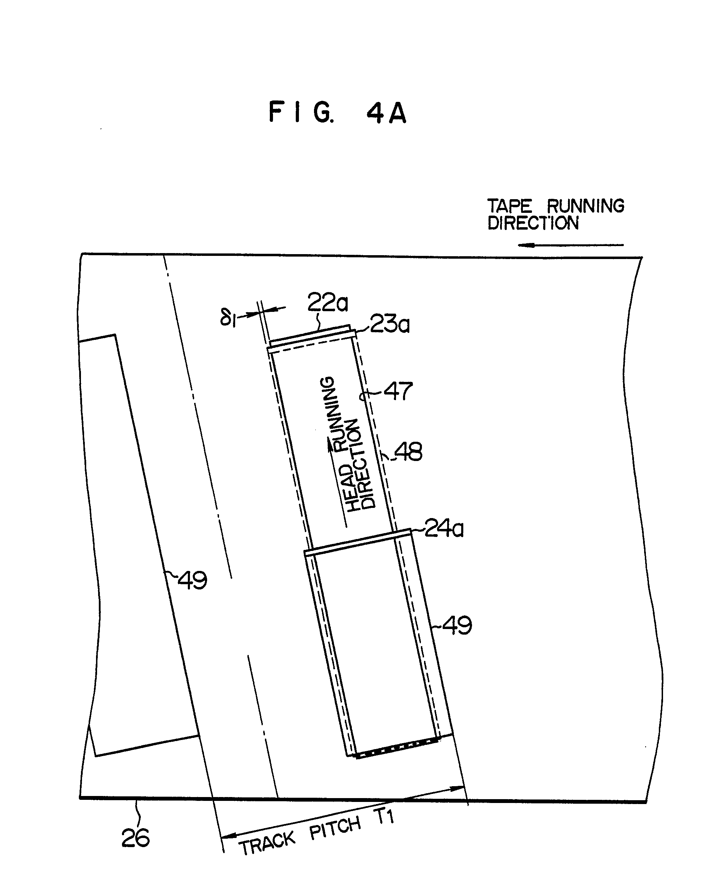

Fig. 4A shows a diagrammatical view of a recording track in the normal (SP) mode in an embodiment of the invention. In the diagram, $T_1$ denotes a track pitch in the SP mode. Reference numeral 47, 48, and 49 indicate recording tracks formed by the FM audio head 22a, PCM audio head 23a, and video head 24a,

6

respectively. $\delta_1$ represents a deviation between the FM audio recording track 47 and the PCM audio recording track 48. As will be obvious from this diagram, in the SP mode, the FM audio, PCM audio, and video recording tracks are formed on the same track.

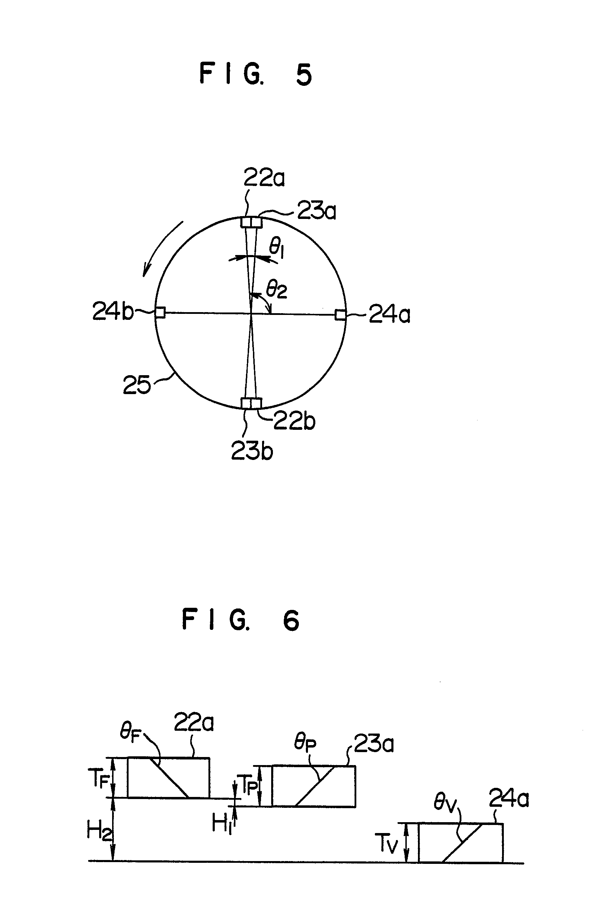

Fig. 5 shows an arrangement of the FM audio heads 22a and 22b, PCM audio heads 23a and 23b, and video heads 24a and 24b on the cylinder 25 in the embodiment of Fig. 4A. The FM audio head 22a is always preceding to the PCM audio head 23a with respect to the time. Further, the PCM audio head 23a is likewise always preceding to the video head 24a. Thus, the FM audio recording track 47 is overlappingly written at least once by the PCM audio head 23a. The PCM audio recording track 48 is also overlappingly written at least once by the video head 24a. In Fig. 5, the PCM audio head 23a is delayed from the FM audio head 22a by only the amount of an attaching angle $\theta_1$. However, for example, if the FM audio head 22a and PCM audio head 23a are constituted as a compound head (double azimuth head), the distance between both heads can be reduced to about 100 $\mu$m or less. Therefore, the attaching angle $\theta_1$ is smaller than 0.2° and the positions of the FM audio head and PCM audio head are substantially coincident.

The azimuth angle of the PCM audio head is set to, e.g., 45° in order to reduce the amount of crosstalks between the FM audio signals and the PCM audio signals and between the video signal and the PCM audio signals in the SP and EP modes. In the SP mode in the NTSC system, the azimuth angles of the respective heads are set to a combination of 30°, -45°, and -6° and a combination of -30°, +45°, and +6°, respectively. In the case of the EP mode in the NTSC system, the azimuth angles are set to a combination of +30°, -45°, and +6° and a combination of -30°, +45°, and -6°, respectively.

Fig. 6 is a diagram showing the differences among the heights of the respective heads, the head widths, and the azimuth angles in the cases of Figs. 4A and 5. $T_F$ denotes a head width of the FM audio head 22a; $\theta_F$ indicates its azimuth angle; $T_P$ and $\theta_P$ a head width and an azimuth angle of the PCM audio head 23a; and $T_V$ and $\theta_V$ a head width and an azimuth angle of the video head 24a. In Fig. 6, $\theta_F = +30°$, $\theta_P = -45°$, and $\theta_V = -6°$. Therefore, the polarities of the azimuths of an FM audio recording track 47a and a PCM audio recording track 48a are opposite. The polarities of the azimuths of the FM audio recording track 47a and a video recording track 49a are also opposite. On the other hand, $H_1$ represents the difference between the heights of the FM audio head 22a and PCM audio head 23a. $H_2$ indicates the difference between the heights of the FM audio head 22a and video head 24a. The deviation $\delta_1$ between the FM audio recording track and the PCM audio recording track is expressed by $\delta_1 = H_1 - T_1 \times \theta_1/180 \simeq H_1$

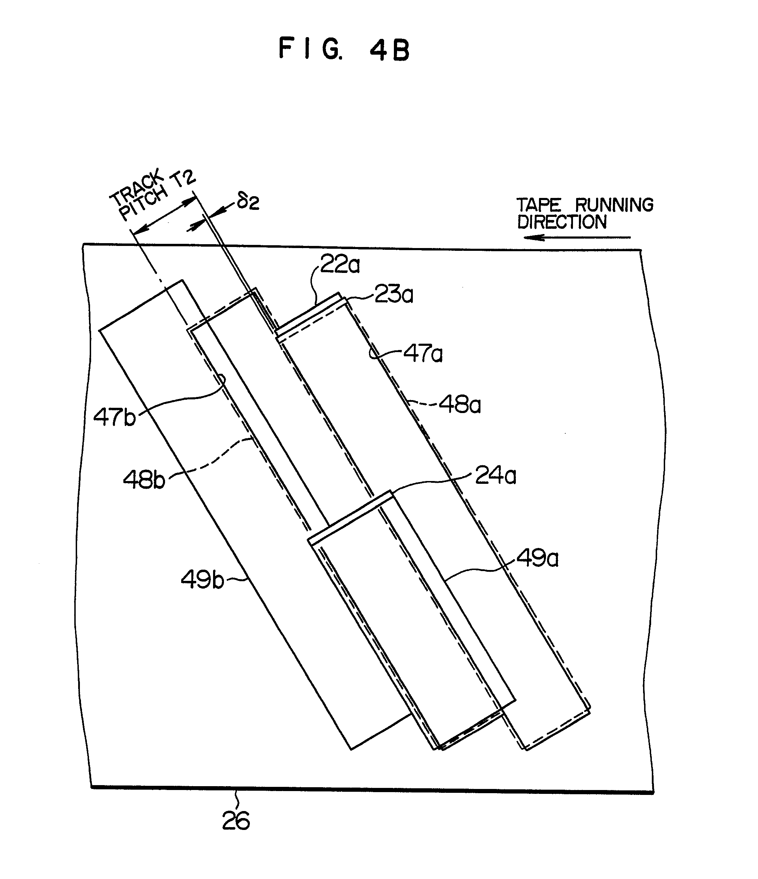

Fig. 4B shows recording tracks in the 1/3-speed (EP) mode in the embodiment in a manner similar to Fig. 4A. $T_2$ denotes a track pitch in the EP mode. In this case, the arrangement of the heads and the differences among the heights of the heads are the same as those in Figs. 5 and 6. The head width of each of the FM audio head 22a, PCM audio head 23a, and video head 24a is selected to, for example, a value wider than the track pitch $T_2$. Therefore, the first recording track width is the same as the head width. However, since the overlap erasure is executed by the head on the opposite side after that, the recording track width is equalized to the track pitch $T_2$.

It is, further, a different point from the SP mode that since the recording track which is formed by the video head 24a is delayed by one track than the recording tracks formed by the FM audio head 22a and PCM audio head 23a as shown in Fig. 4B, the polarity of the azimuth of the recording track of the video head changes. On the other hand, even in the 1/3-speed (EP) mode, due to the difference $H_1$ between the heights of the FM audio head and PCM audio head, a deviation $\delta_2$ between the FM audio and PCM audio recording tracks is also expressed by $\delta_2 = H_1 - T_2 \times \theta_1/180 \simeq H_1$

The frequency characteristics of the crosstalks in the foregoing embodiment will now be explained.

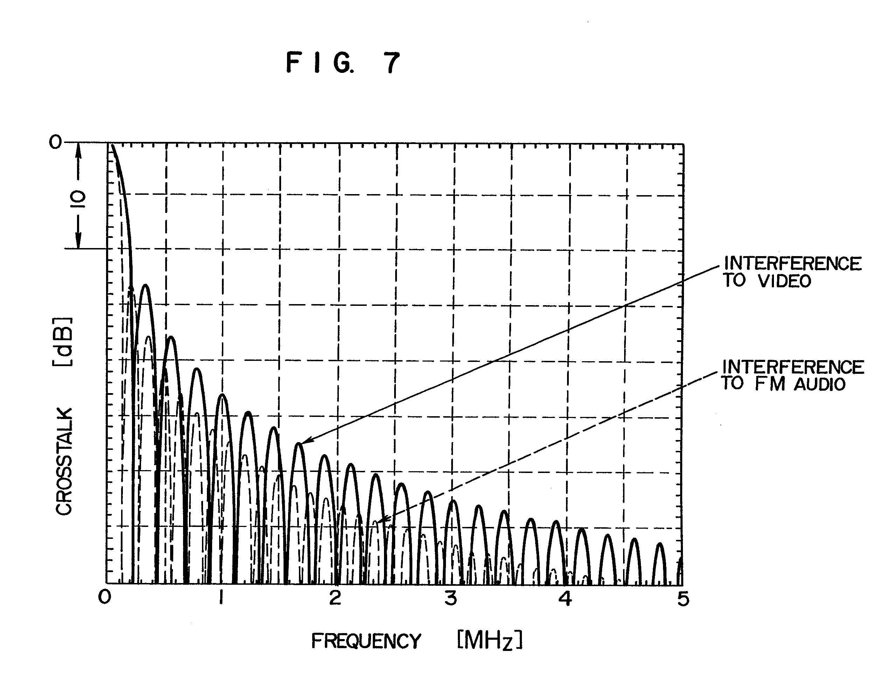

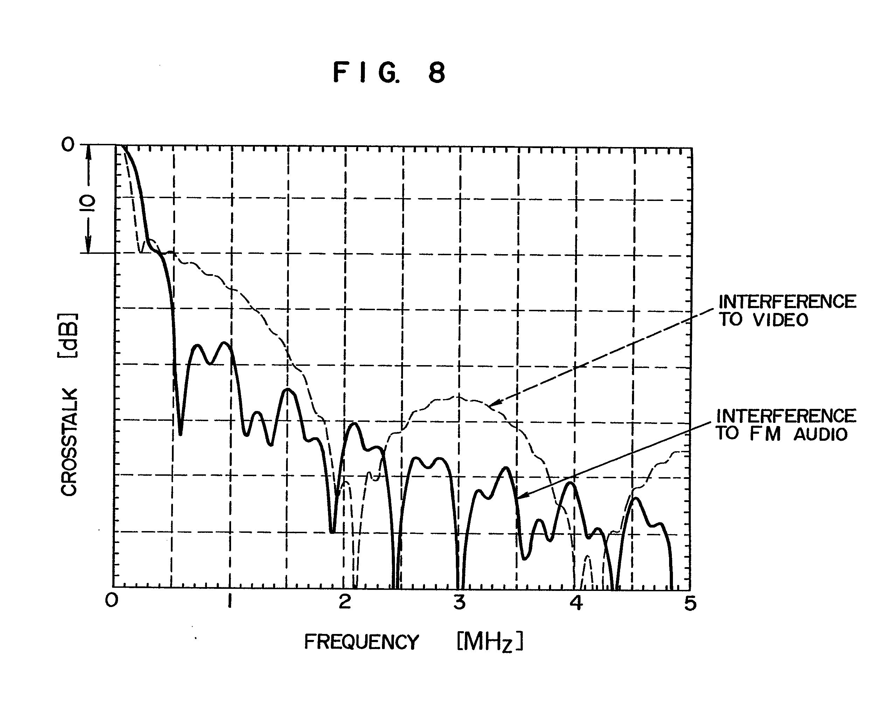

Figs. 7 and 8 show frequency characteristics of the crosstalks from the PCM audio signals to the video or FM audio signals in the SP and EP modes in the NTSC system in the case of the foregoing azimuth angles. In this case, the FM audio head width is 30 $\mu$m, the PCM audio head width is 29 $\mu$m, and the video head width is 30 $\mu$m.

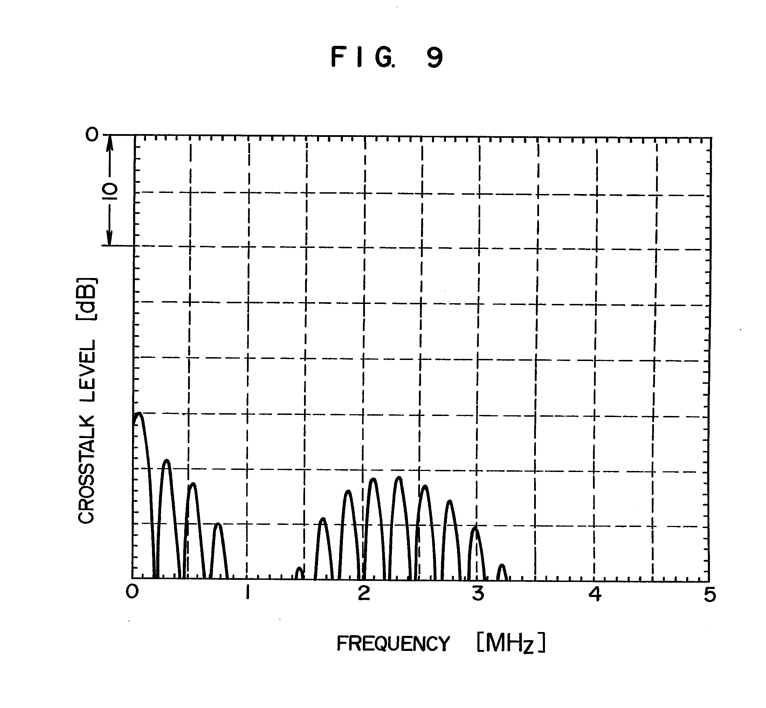

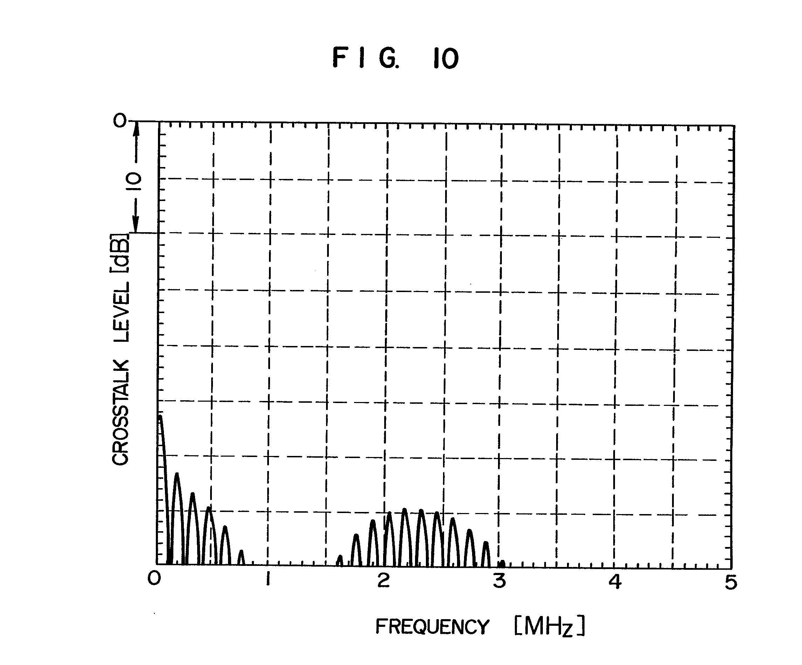

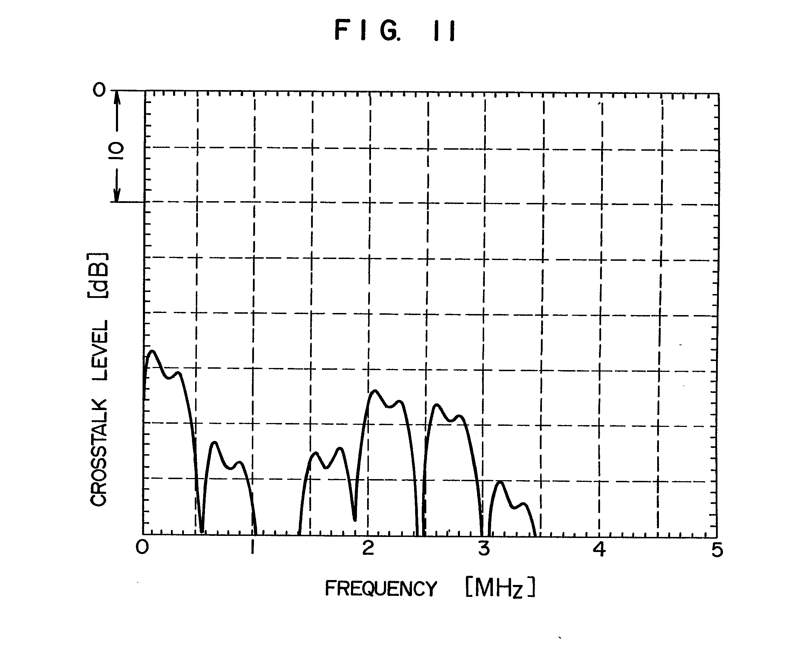

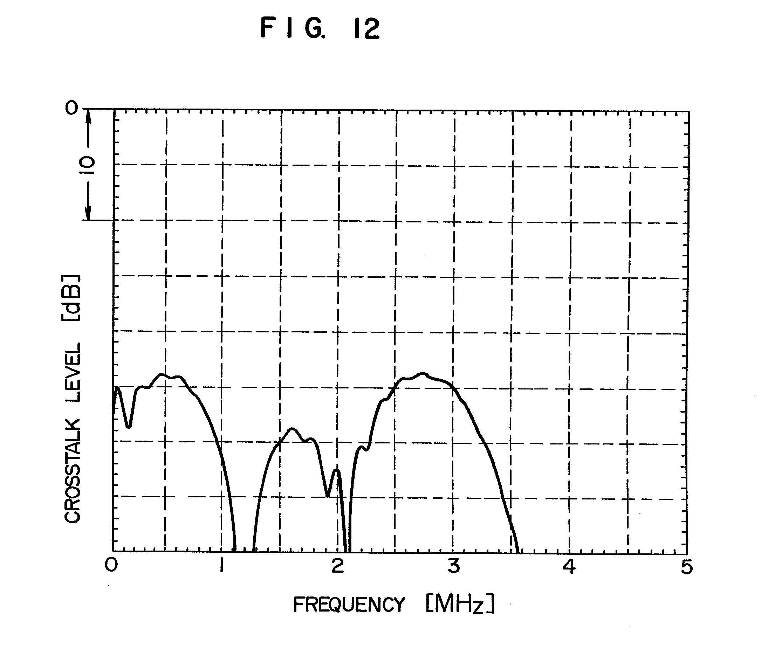

Figs. 9 to 12 show frequency characteristics of the crosstalk components of the PCM audio signals to the FM audio signals and video signal in the case where the PCM audio signals were O-QDPSK modulated at the carrier frequency of 2.5 MHz and recorded by the PCM audio heads of the azimuth angle ± 45°. Fig. 9 shows the crosstalk characteristic to the video system in the SP mode. Fig. 10 shows the crosstalk characteristic to the HiFi system (FM audio signals) in the SP mode. Fig. 11 shows the crosstalk characteristic to the video system in the EP mode. Fig. 12 shows the crosstalk characteristic to the HiFi system in the EP mode. As shown in Figs. 9 to 12, by setting the azimuth angles of the PCM audio heads to ± 45° and by using the foregoing combinations, the crosstalk amount can be reduced. On the other hand, in the case where the azimuth angles of the PCM audio heads are ±45°, even if only the polarity of the azimuth angles of the PCM audio heads are reversed, the similar effects can be expected.

In the foregoing embodiment, an explanation has been made with respect to the case where the azimuth angles of the PCM audio heads are set to ±45°. However, when the azimuth angles are set to large values, problems such that the equivalent linear velocity decreases and the effective linear density increases occur. Therefore, the head gap width needs to be narrowed. In addition, the erasing characteristic of the FM audio signals by the PCM audio signals also changes. As explained above, the recording and reproducing preformances can be improved by considering the foregoing characteristics for the azimuth angles of the PCM audio heads together with the head widths and track pitches.

As described in the above embodiment, in the VHS system HiFi VTR, the azimuth angles of the FM audio heads are ± 30° and the azimuth angles of the video heads are ± 6°. In the recording mode, the FM audio signals are first recorded by the FM audio heads. Next, the video signal is recorded by the video heads on the signals recorded by the FM audio heads.

In the normal (SP) mode, the polarities of the azimuth angles of the FM audio heads by which the FM audio signals were recorded are opposite to the polarities of the azimuth angles of the video heads by which the video signal was recorded. In the 1/3-speed (EP) mode, the former polarities and the latter polarities are the same. The foregoing conditions are satisfied in the case of recording the FM audio signals. However, it is also necessary to satisfy those conditions in the case of recording the PCM audio signals.

Further, it is necessary to consider the crosstalk interferences between the PCM audio signals and the FM audio signals and between the PCM audio signals and the video signal. To reduce such interferences, it is effective to reverse the polarities of the azimuth angles of the heads for the PCM audio signals and for the FM audio signals. On the other hand, to reduce the crosstalk interferences between the PCM audio signals and the video signal in the EP mode, it is effective to reverse the polarities of the azimuth angles of the heads for the PCM audio signals and for the video signal.

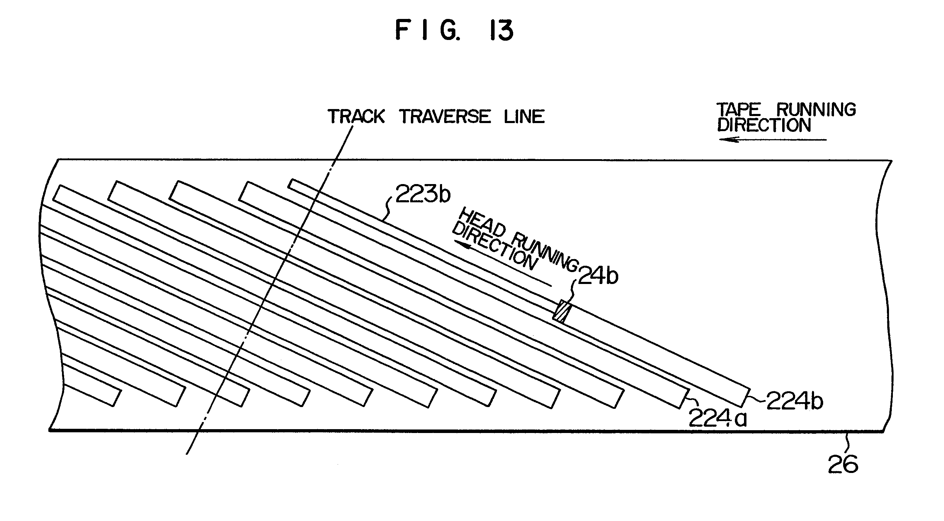

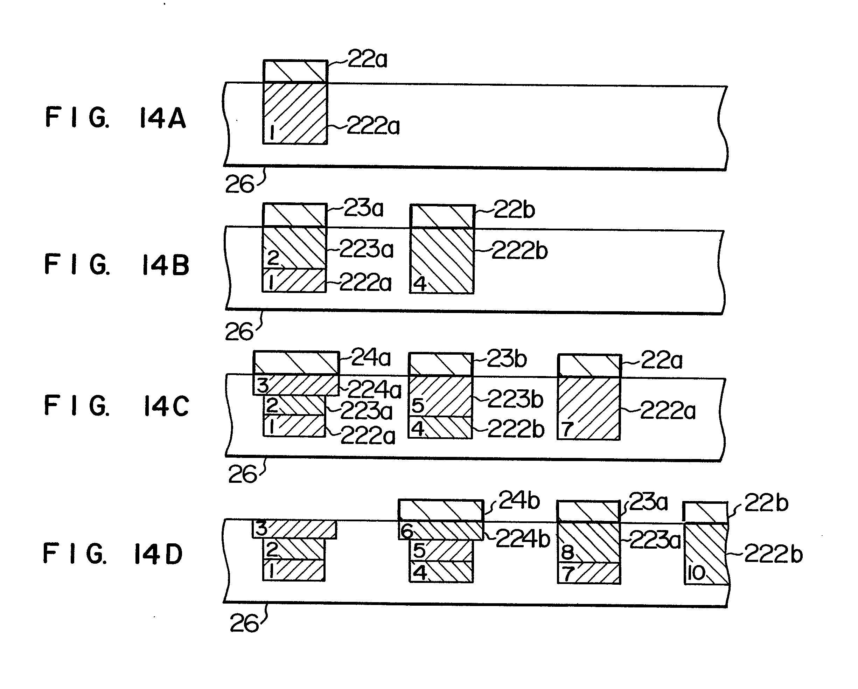

Fig. 13 shows an embodiment of recording tracks on the magnetic tape 26 in the case of using the heads arranged on the cylinder as shown in, e.g., Fig. 5. Figs. 14A to 14D are cross sectional views of the recording tracks formed on the tape 26 taken along the traverse line indicated by an alternate long and short dash line which is perpendicular to the recording tracks shown in Fig. 13. Figs. 14A to 14D sequentially show the recording states. In Fig. 14A, an FM audio track 222a is recorded by the FM audio head 22a. In Fig. 14B, a PCM audio track 223a is recorded in the upper layer portion by the PCM audio head 23a while leaving the deep layer portion of the track 222a. Further, an FM audio track 222b is recorded by the FM audio head 22b. Next, in Fig. 14C, a video track 224a is recorded in the upper layer portion of the track 223a by the video head 24a. In a manner similar to the above, as shown in Fig. 14D, the FM audio tracks, PCM audio tracks, and video tracks are sequentially recorded in the respective corresponding layers. Numerical values written in the respective recording regions in the diagrams indicate an example of the recording orders.

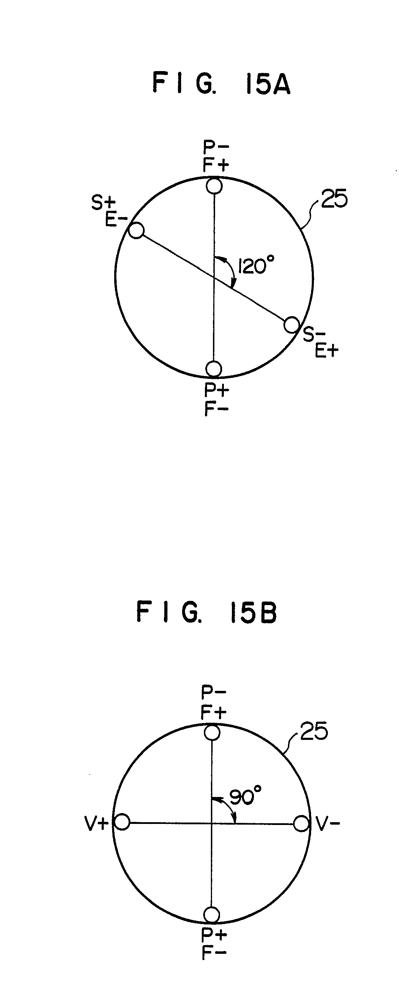

Figs. 15A and 15B show examples of an arrangement of the heads on the cylinder 25. In the diagrams, P + and P-denote PCM audio recording heads having positive and negative azimuth angles; F + and F-indicate FM audio recording heads having positive and negative azimuth angles; S + and S-are video recording heads having positive and negative azimuth angles in the SP mode; E + and E-are video recording heads having positive and negative azimuth angles in the EP mode; and V + and V-are video recording heads having positive and negative azimuth angles which are common in the SP and EP modes.

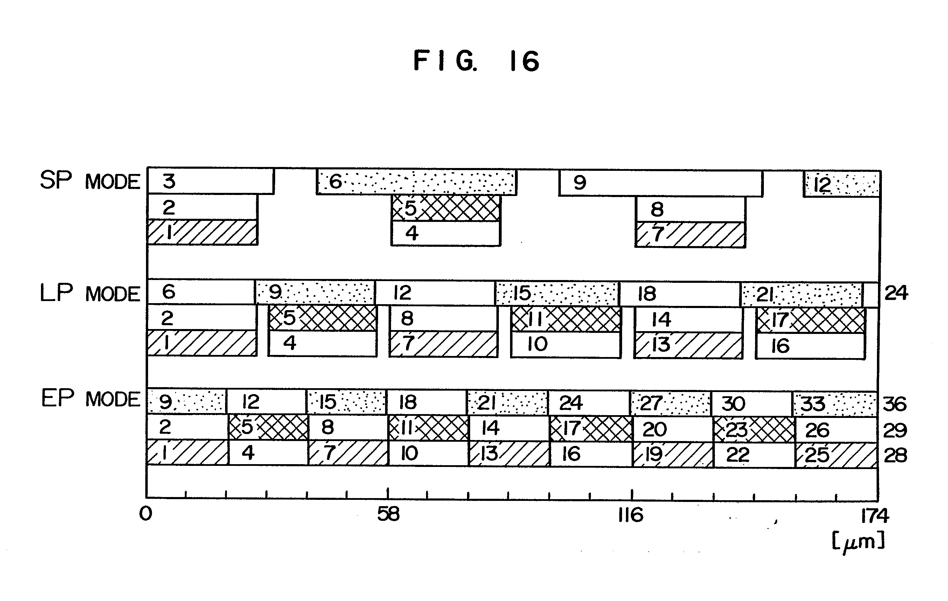

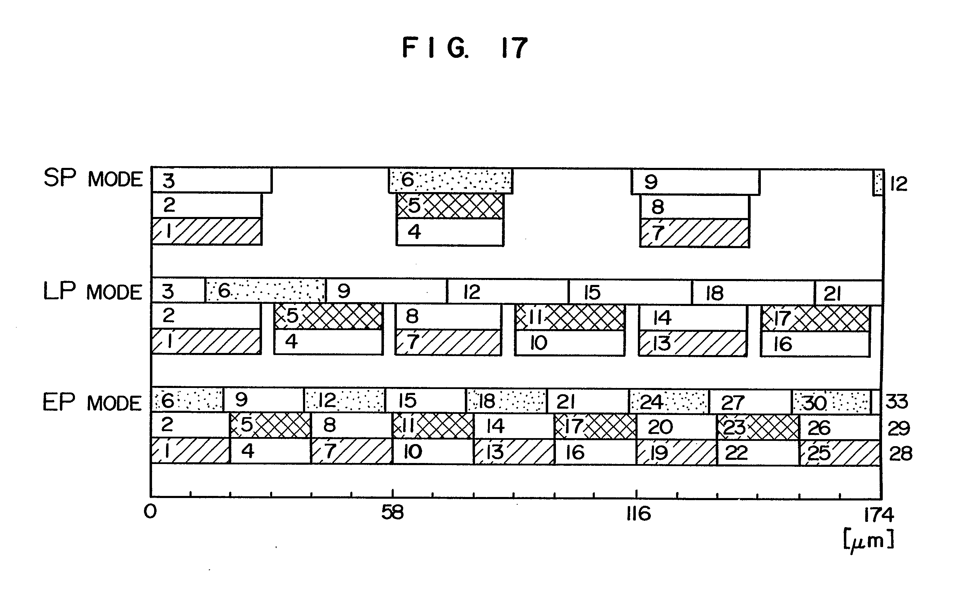

Figs. 16 and 17 are cross sectional views showing recording tracks on the tape taken along a traverse line which is perpendicular to the tracks in a manner similar to Fig. 14. In the diagrams, SP, LP, and EP denote the normal, 1/2-speed, and 1/3-speed recording mode according to the NTSC system in, e.g., the VHS system VTR. In each diagram, an axis of ordinate indicates a depth direction, the upper portion represents the surface layer, and the lower portion indicates the deep layer. An axis of abscissa denotes a track width direction. Fig. 16 shows a pattern diagram when using the head arrangement of Fig. 15A. Fig. 17 shows a pattern diagram when using the head arrangement of Fig. 15B. The track widths and head arrangement in each heads constitution are as follows.

In the head arrangement diagram of Fig. 5, the angle between the FM audio head 22a and the PCM audio head 23a assumes $\theta_1$ and the angle between the FM audio head 22a and the video head 24a assumes $\theta_2$. The widths of the FM audio heads, PCM audio heads, and video heads attached to the cylinder are set to $W_F$, $W_P$, and $W_V$, respectively. Further, the difference between the heights of the FM audio head and PCM audio head is $H_1$ and the difference between the heights of the FM audio head and the video head is $H_2$.

Table 1 shows the specifications of the cylinder heads in Figs. 15A and 15B.

## Table 1

| | In the case of Fig. 15A | In the case of Fig. 15B |
|---|---|---|
| $\theta_1$ | 0° | 0° |
| $\theta_2$ | -120° | -90° |
| $H_1$ | 0 | 0 |
| $H_2$ (SP) | -57 | -29.0 |
| $H_2$ (EP) | -52 | -29.0 |
| $W_F$ | 26 | 26 |
| $W_P$ | 26 | 26 |
| $W_V$ (SP) | 48 | 30 |
| $W_V$ (EP) | 30 | 30 |

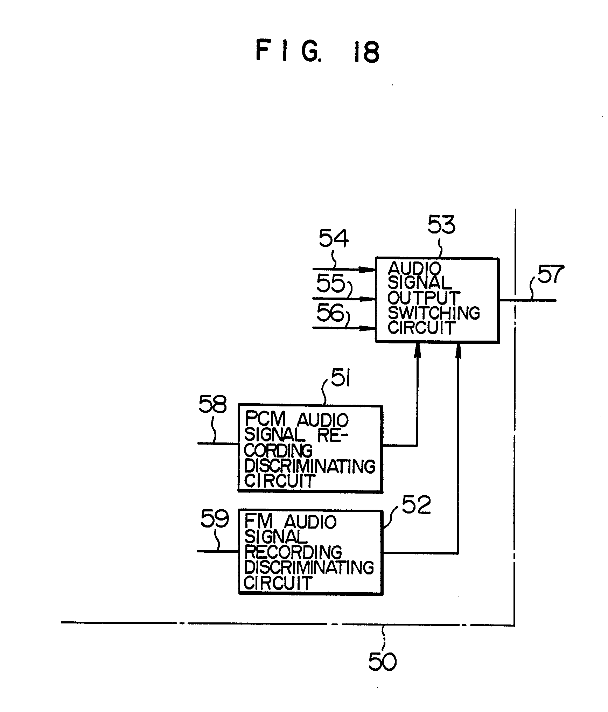

In an apparatus to reproduce the signals from the tape recorded by the foregoing recording system, an explanation concerning to a method for changing of output signals will now be made by a reproduction audio signal control circuit 50 in an embodiment of Fig. 18.

First, there is provided a discriminating circuit 51 to detect whether PCM audio signals have been recorded or not. If the PCM audio signals have been recorded, PCM audio signals 54 are reproduced and output as an audio signal output 57 from an audio signal output switching circuit 53. If they are not recorded, it is checked by a discriminating circuit 52 to see if FM audio signals have been recorded or not. If the FM audio signals have been recorded, FM audio signals 55 are reproduced and output. If they are not recorded, linear track audio signals 56 are reproduced and output.

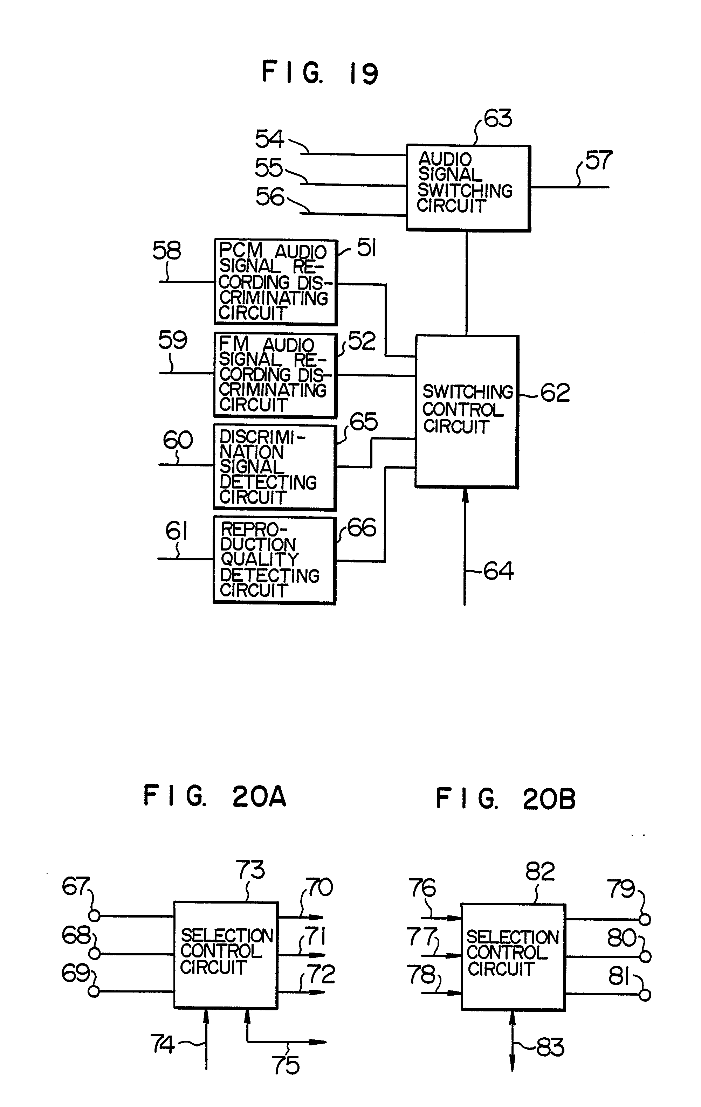

Another embodiment will now be explained with reference to Fig. 19. At the reproducing and outputting stage of the PCM audio signals, a detecting circuit 66 to detect the reproduction quality of the PCM audio signals 61 is provided. If it is determined that this quality is a predetermined quality level or less, the FM audio signals are reproduced and output. A discrimination signal 60 indicating whether the PCM audio signals are the same as the FM audio signals or not is input to a discrimination signal detecting circuit 65. If it is decided by the detecting circuit 65 that the PCM audio signals are different from the FM audio signals, the switching from the PCM audio signals to the FM audio signals is stopped. The signals for the foregoing output switching control are produced by a switching control circuit 62. Reference numeral 64 denotes, e.g., a switching control signal to switch the audio output. The control signal 64 is produced by an output change-over switch or the like.

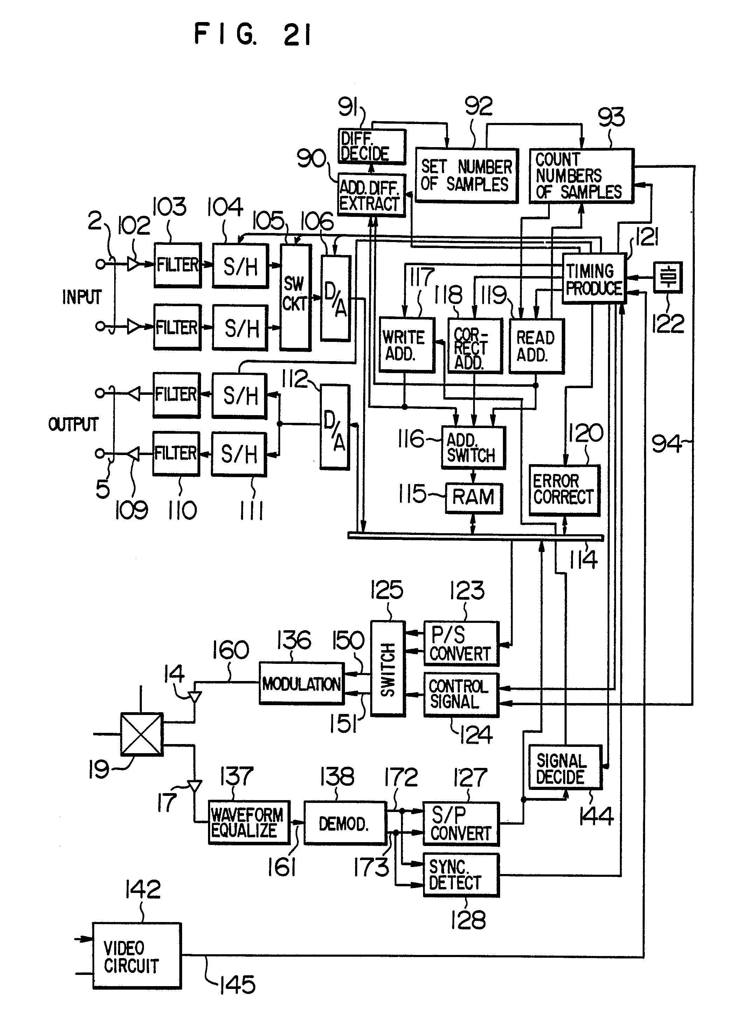

For example, on the basis of the result of the decoding of an error detection/correction code in the PCM audio signal reproduction processor 11 shown in Fig. 1, the reproduction quality detecting circuit 66 discriminates the reproduction signal quality by checking code errors are larger than a predetermined value or smaller. It is also possible to make such a discrimination of the reproducing signal quality on the basis of the reproduction signal level, dropout of the signals, clock recovery situation in a demodulator 138 in Fig. 21, which will be explained hereinlater, or the like.

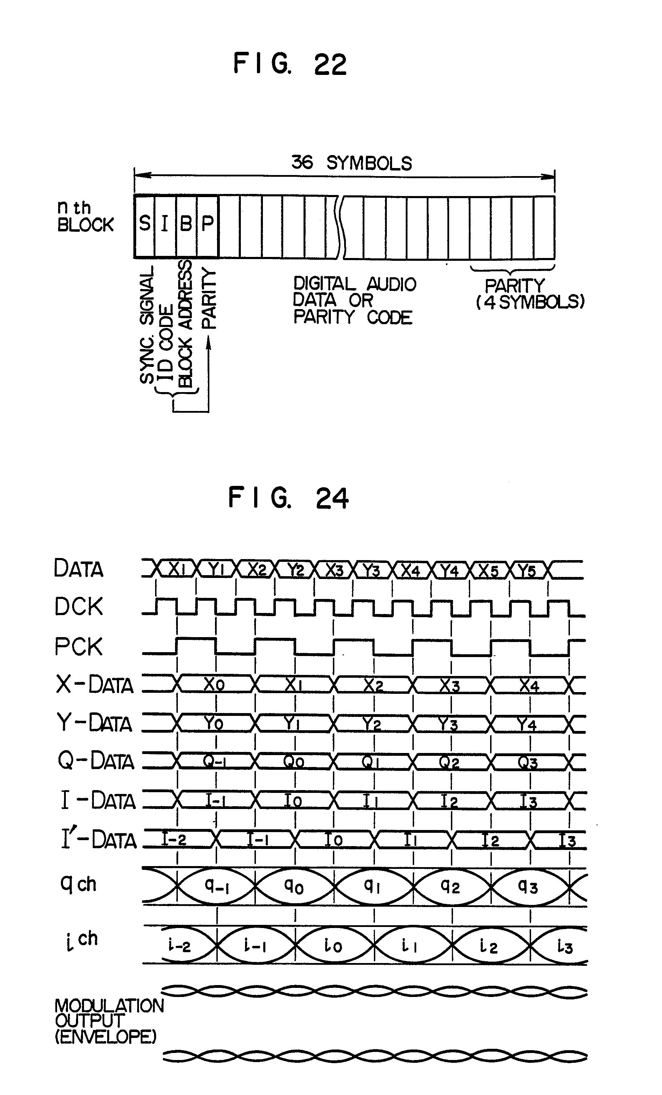

Figs. 20A and 20B are diagrams showing embodiments of a constitution of a selection control circuit of the PCM audio signals, FM audio signals, and linear track audio signals. Fig. 20A shows a constitution of a selection control circuit 73 of the recording system. Reference numerals 67, 68, and 69 denote input terminals of the PCM, FM, and linear track audio signals, respectively. Numerals 70, 71, and 72 indicate output signals to the PCM, FM, and linear track audio signal processors, respectively. The output signals 70 and 71, for example, are connected to the input terminals 2 and 1 in Fig. 1. Numeral 74 denotes an audio signal selection control signal 74 of the recording system. For example, the control signal 74 controls the output signals to the audio signal processors and is used to select whether the different signals from the signal input terminals 67, 68, and 69 are recorded or the signals from either one of those input terminals are recorded, or the like. Selection information 75 is added as, e.g., a display or discrimination signal into the discrimination signal in the PCM signals, e.g., into an ID code area in Fig. 22.

Fig. 20B shows a constitution of a selection control circuit 82 of the reproducing system. Reference numerals 76, 77, and 78 denote output signals of the PCM, FM, and linear track audio signal processors. For example, the output signals 76 and 77 are connected to the output terminals 5 and 4 in Fig. 1, respectively. Numeral 83 denotes an audio signal output selection control signal for the audio signal output selection control circuit 82. Numerals 79, 80, and 81 indicate output terminals of the PCM, FM, and linear track audio signals.

Fig. 21 shows a constitution of an embodiment in which PCM audio signal recording and reproducing processors are integrally formed. In the recording mode, the analog signals of two channels of left (L) and right (R) are input from the PCM audio signal input terminals 2. The input signals are amplified to a predetermined level by an amplifier 102 and their bands are limited by filters 103. Thereafter, the signals are sampled and held by sample and hold (S/H) circuits 104. The sampling input signals are sequentially input to an A/D converter 106 through a switching circuit 105 and converted into the PCM signals. The PCM signals converted by the A/D converter 106 are written into an RAM 115 through a bus line 114. Addresses in the RAM 115 are controlled by address producing circuits 117 to 119 and an address switching circuit 116, thereby arranging the PCM signals and adding error correction codes in accordance with a predetermined format. The error correction codes are added by use of an error correction circuit 120. After the PCM signals were arranged and the error correction codes were added, each data is sequentially read out of the RAM 115.

In this case, the read address producing circuit 119 is controlled in a manner such that the number of audio signal samples in one field which are counted by a counter 93 is equal to the number of samples which was set by a circuit 92 to set the number of samples in one field on the basis of a discrimination signal derived from a difference deciding circuit 91 to discriminate the difference between the write address and read address extracted by an address difference extracting circuit 90. The signals read out of the RAM 115 are converted into the serial signal by a parallel-to-serial (P/S) converter 123. When the number of audio signals in one field is small, signals other than the audio signals, a code to discriminate whether the signals are the audio signals or not, and a control signal such as sync signal or the like are added after the audio signals by a control signal producing circuit 124 and a switching circuit 125 on the basis of an output 94 from the counter 93 and a signal from a timing producing circuit 121. Then, predetermined data is modulated by a modulator 136. The signals from the modulator 136 are amplified to a predetermined level by the amplifier 14 and recorded to the magnetic tape 26 by, e.g., the PCM audio rotary heads 23 through the switching device 19. The timing producing circuit 121 produces a timing signal to control the whole apparatus on the basis of clocks produced from an oscillator 122, a head switching signal 145 from a video circuit 142, a sync signal, and the like.

In the reproducing mode, the signals reproduced by the PCM audio heads 23 are amplified to a predetermined level by the PCM audio reproduction amplifier 17 through the switching device 19 and their waveforms are equalized by a waveform equalizer 137. The waveform equalized signals are demodulated by the demodulator 138. The sync signal is detected from the demodulated digital signals by a sync detecting circuit 128 and at the same time, the digital signals are then converted into the parallel signals by a serial-to-parallel (S/P) converter 127. The detected sync signal is used as a reference signal to reproduce the data. A check is made by a signal deciding circuit 144 to see if the converted parallel signals are the audio signals or the other signals. Only the audio signals are stored into the RAM 115 or the audio signals and the data other than the audio signals are also stored into the RAM 115. The data is rearranged and the error correction is executed by the error correction circuit 120. The error corrected digital data is input to a D/A converter 112 through the bus line 114 and sequentially converted into the analog signals and resampled by sample and hold circuits 111 every channel. The resampled analog signals of each channel are output from the PCM audio signal output terminals 5 through filters 110 and amplifiers 109.

Fig. 22 shows an embodiment of a data block constitution of a signal format which is output from the switching circuit 125 in Fig. 21. An identification code (or ID code) indicative of the kind and format of the signals is added together with the PCM audio signals (or digital data) and error detection/recorrection parities. A parity for error detection of the ID code and block address is produced and added. In Fig. 22, one symbol consists of eight-bit data.

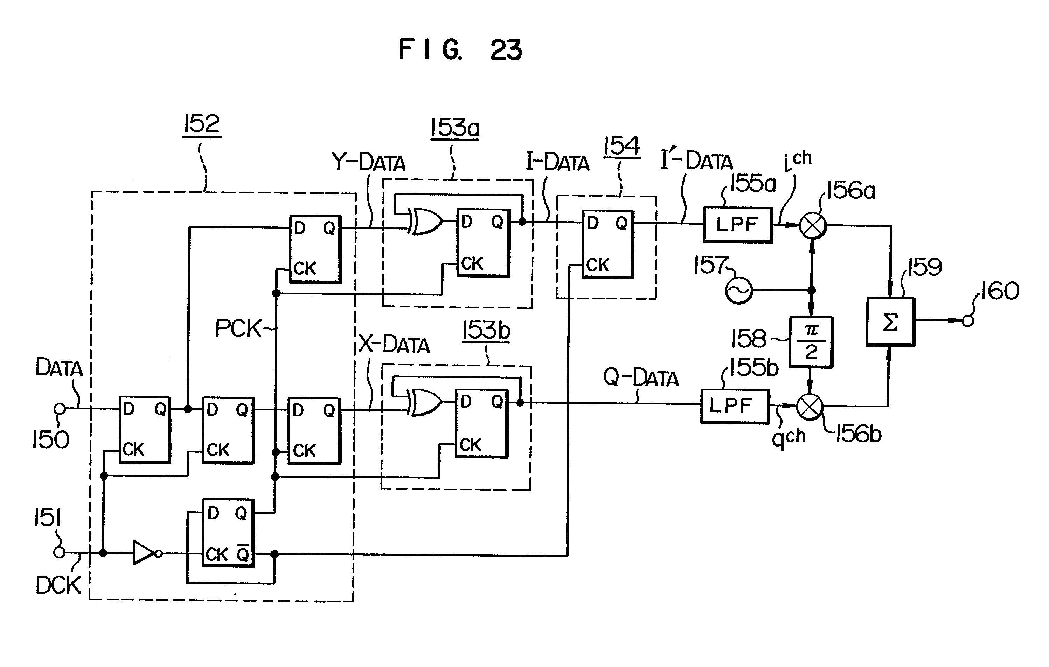

Fig. 23 shows a practical example of the modulator 136 shown in Fig. 21. In this embodiment, the O-QDPSK modulator is used. Please refer to the foregoing U.S. Patent Application Serial No. 872,902 for the O-QDPSK modulator/demodulator which are used in the embodiment. In Fig. 23, reference numeral 150 denotes an input terminal for the digital data (DATA); 151 is an input terminal for clocks (DCK) which are bit synchronized with the digital data DATA; and 152 is a converter to convert the input digital data into the parallel data (X-DATA and Y-DATA) of two bits. The converter 152 is constituted by five D-type flip-flops and one inverter. Numerals 153a and 153b denote differential encoders to the code of each parallel data to change in other words, the phase change of the modulation waves has information. Numeral 154 denotes a delay circuit to delay one of the parallel data by the amount of 1/2 data period; 155a and 155b indicate low pass filters (LPFs) to waveform shape the digital signals and to limit the bands of the modulation waves; 156a and 156b are balanced modulators to modulate the carriers by the waveform shaped digital signals; 157 a carrier oscillator; 158 a 90° phase shifter to obtain the quadrature carrier; 159 an adder; and 160 an output terminal of the O-QDPSK signals.

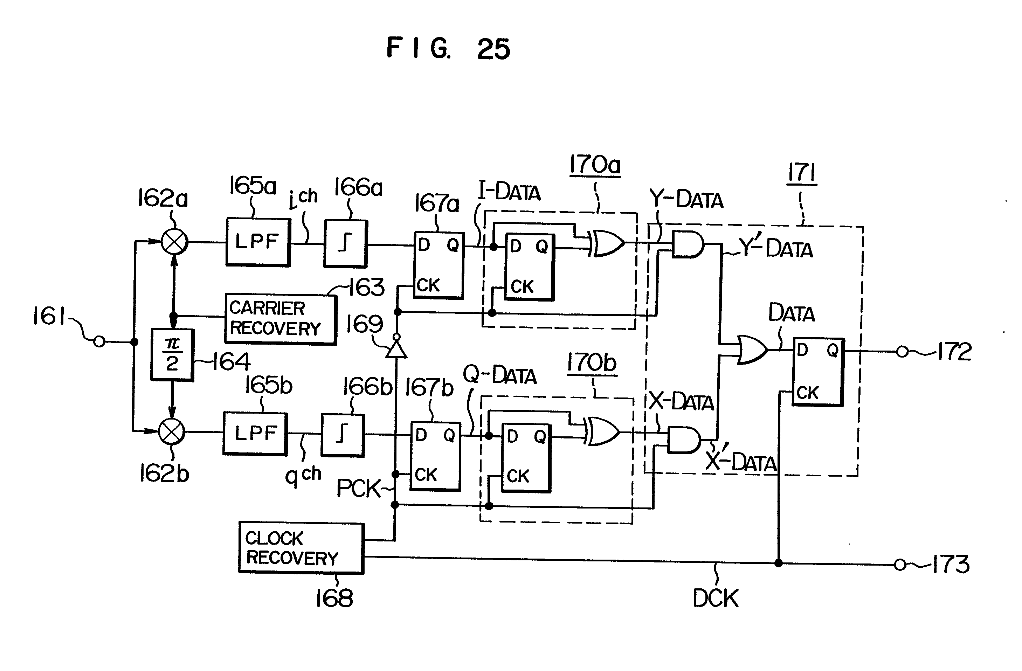

Fig. 24 is a waveform diagram showing the operation in each section in the modulator 136. As explained above, according to the O-QDPSK system, the amplitude fluctuation is suppressed by shifting the converted two-bit parallel data X-DATA and Y-DATA by the amount of 1/2 parallel data period. Therefore, the recorded spectrum is not widened even for the nonlinear characteristic in the magnetic recording, so that the interference to the video signal hardly occurs.

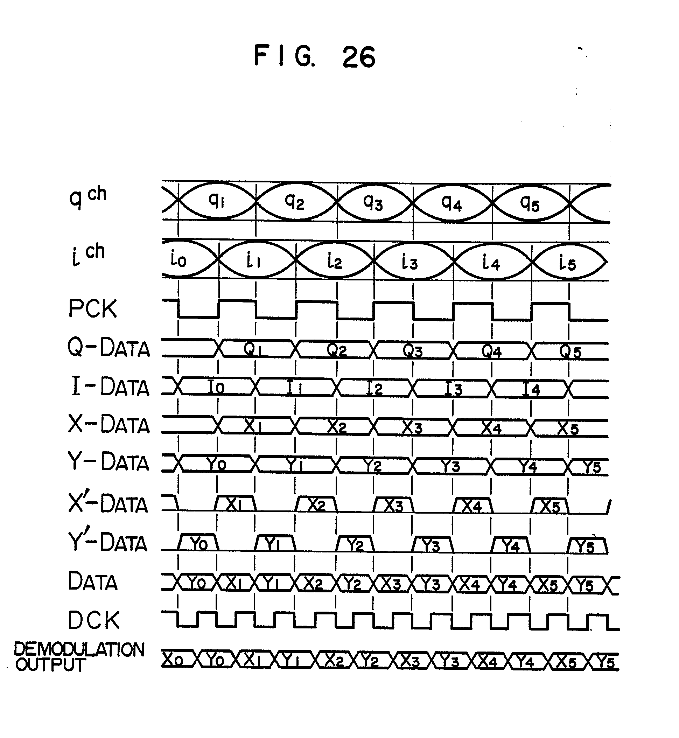

Fig. 25 is a constitutional diagram showing a practical example of the O-QDPSK demodulator 138. In the diagram, reference numeral 161 denotes an input terminal for the reproduced O-QDPSK signals; 162a and 162b are phase detectors to detect the phases of the reference carrier signal recovered by a carrier recovering circuit 163 and of the input modulation wave signals; 164 is a 90° phase shifter; 165a and 165b low pass filters (LPFs) to eliminate the unnecessary harmonic components generated by the phase detectors 162a and 162b; 166a and 166b comparators to descriminate polarities (positive or negative) of the detected signals and to convert into the digital signals; 167a and 167b latch circuits to latch the digital signals from the comparators 166a and 166b at the timings of the clocks recovered by a clock recovering circuit 168; 169 an inverter; 170a and 170b differential decoding circuits to decode the data trains encoded by the modulators to the original data trains; 171 a parallel-to-serial (P/S) converter to convert the two-bit parallel data into the original serial data; 172 an output terminal for the demodulation data; and 173 an output terminal for the recovering clocks which are bit synchronized with the demodulation data. Fig. 26 is a waveform diagrams for the operation in each section in Fig. 25. In this manner, the input waves are coherent detected by the reproduced reference carriers and the detected signals are latched by the recovered clocks, so that data I-DATA and Q-DATA are obtained. Further, by differential decoding these data, the data X-DATA and Y-DATA are obtained. The resultant parallel data are converted into the serial data, so that the final demodulation data is obtained.

Now, assuming that the carrier frequency of the O-QDPSK modulation is 3.0 MHz, the carrier frequency $f_i$ of the FM audio signals is 1.7 MHz. Thus, the frequency $f_i$ is out of the band of the frequency spectrum of the O-QDPSK modulation signals. Therefore, there are effects such that the problem on the crosstalk can be reduced and the amount of FM audio signals which will be erased by the O-QDPSK modulated PCM audio signals can be decreased.

As described above, according to the recording system of the invention, since the FM audio signals based on the existing VHS system VTR can be recorded simultaneously with the PCM audio signals, even if the tape recorded by this recording system is reproduced by an apparatus which does not have the reproducing system for the PCM audio signals, the FM audio signals can be also reproduced.

Further, in the case of an apparatus capable of reproducing the PCM audio signals in which the FM audio signals can be reproduced from the tape in which only the FM audio signals were recorded and no PCK audio signal is recorded, the FM audio signals can be reproduced. Therefore, the compatibility between the PCM audio signals and the existing FM audio signals can be obtained.

In the case of an apparatus capable of recording both of the PCM and FM audio signals, on the other hand, only either one of the PCM and FM audio signals can be also recorded.

On the other hand, by provided the mode in which the PCM audio signals, FM audio signals, and linear track audio signals are respectively recorded as the same audio signals and the mode to record them as the different signals and by providing the selecting circuits for the PCM, FM, and linear track audio signals and their signal input and output terminals, for example, both of the PCM and FM audio signals can be made independent and the audio signals of four channels can be recorded and reproduced.

A signal to discriminate those modes can be included in the discrimination signal in the PCM audio signal recording data.

## Claims

1. A magnetic recording and reproducing apparatus for overlappingly recording a plurality of signals onto a same track, comprising:

a pair of first magnetic recording and reproducing means (22a and 22b) having a first azimuth angle and whose polarities are different;

a pair of second magnetic recording and reproducing means (23a and 23b) having a second azimuth angle different from said first azimuth angle and whose polarities are different; and

a pair of third magnetic recording and reproducing means (24a and 24b) having a third azimuth angle different from said first and second azimuth angles and whose polarities are different,

wherein at least parts of recording tracks (47a and 47b; 222a and 222b) formed by said first magnetic recording and reproducing means (22a and 22b) are overlappingly recorded by said second magnetic recording and reproducing means (23a and 23b), at least parts of recording tracks (47a and 47b, 222a and 222b; 48a and 48b, 223a and 223b) of the first and second magnetic recording and reproducing means (22a and 22b; 23a and 23b) are overlappingly recorded by said third magnetic recording and reproducing means (24a and 24b), and the deep layer (39) recording by the first magnetic recording and reproducing means, the intermediate layer (40) recording by the second magnetic recording and reproducing means, and the surface layer (41) recording by the third magnetic recording and reproducing means are executed on the same track.

2. An apparatus according to claim 1, wherein in a first mode, a polarity of said first azimuth angle of said first magnetic recording and reproducing means (22a and 22b) and a polarity of said third azimuth angle of said third magnetic recording and reproducing means (24a and 24b) are different in most of the overlap recording portions, and in a second mode, the polarity of the first azimuth angle of the first magnetic recording and reproducing means and the polarity of the third azimuth angle of the third magnetic recording and reproducing means are coincident in most of the overlap recording portions.

3. An apparatus according to claim 2, wherein said first, second, and third magnetic recording and reproducing means (22a and 22b; 23a and 23b; 24a and 24b) record FM modulation audio signals, PCM audio signals, and a video signal, respectively.

4. A magnetic recording apparatus of a helical scan type for overlappingly recording a video signal including an FM modulated luminance signal and audio signals onto tracks, comprising:

means (7) for frequency modulating said audio signals at a carrier frequency lower than a carrier frequency of said luminance signal;

means (8) for converting the audio signals into digital audio signals;

means (136) for digitally modulating an output of said converting means (8) at a carrier frequency lower than the carrier frequency of the luminance signal;

first magnetic recording means (22a and 22b) for recording said FM audio signals onto a magnetic medium;

second magnetic recording means (23a and 23b) for recording said digital modulation audio signals onto the magnetic medium;

third magnetic recording means (24a and 24b) for recording said video signal onto the magnetic medium,

wherein said first, second, and third magnetic recording means (22a and 22b; 23a and 23b; 24a and 24b) sequentially record said FM audio signals, said digital modulation audio signals, and said video signal onto the tracks, so that the FM audio signals are recorded in a deep layer (39), the digital modulation audio signals are recorded in an intermediate layer (40), and the video signal is recorded in a surface layer (41).

5. An apparatus according to claim 4, wherein said first, second, and third magnetic recording means (22a and 22b; 23a and 23b; 24a and 24b) have mutually different azimuth angles.

6. An apparatus according to claim 4, wherein the carier frequency of said digital modulating means (136) is higher than the carrier frequency of said frequency modulating means (7).

7. A magnetic recording and reproducing apparatus of a rotary head type for recording and reproducing a video signal having at least a frequency modulated luminance signal and audio signals onto a magnetic tape (26), comprising:

means (7) for supplying the FM signals of said audio signals;

means (8) for supplying the PCM signals of said audio signals;

means (136) for offset quadrature differential phase-shift keying (O-QDPSK) modulating said PCM audio signals;

first rotary head means (22a and 22b) for recording/reproducing said FM audio signals;

second rotary head means (23a and 23b) for recording/reproducing said O-QDPSK modulated PCM audio signals; and

third rotary head means (24a and 24b) for recording/reproducing said video signal,
wherein said FM audio signals and said O-QDPSK modulated PCM audio signals are modulated at a carrier frequency below a frequency band of said FM luminance signal and frequency multiplex recorded.

8. An apparatus according to claim 7, wherein said first, second, and third rotary head means (22a and 22b; 23a and 23b; 24a and 24b) have mutually different azimuth angles.

9. An apparatus according to claim 7, further comprising:
O-QDPSK demodulating means (138) to which reproduction outputs are supplied from said second rotary head means (23a and 23b) and which generates reproduction PCM audio signals.

10. An apparatus according to claim 8, wherein each of said first, second, and third rotary head means (22a and 22b; 23a and 23b; 24a and 24b) consists of a pair of rotary magnetic heads, and said each pair of rotary magnetic heads have azimuth angles of different polarities.

FIG. 1

FM AUDIO RECORDING PROCESSOR 7 — FM AUDIO REPRODUCTION PROCESSOR 10
PCM AUDIO RECORDING PROCESSOR — PCM AUDIO REPRODUCTION PROCESSOR
VIDEO RECORDING PROCESSOR 28 — VIDEO REPRODUCTION PROCESSOR 29
CONTROL SIGNAL PRODUCING CIRCUIT 32
SYSTEM CONTROL 31

# F I G. 2

# F I G. 3A

FM AUDIO SIGNALS

# F I G. 3B

PCM AUDIO SIGNALS

# F I G. 3C

FREQUENCY ⟶

0 275 041

# F I G. 4A

TAPE RUNNING
DIRECTION

22a

23a

δ₁

47

48

HEAD RUNNING
DIRECTION

24a

49

49

26

TRACK PITCH T1

# F I G. 4B

# F I G. 5

# F I G. 6

F I G. 7

CROSSTALK [dB]

FREQUENCY [MHz]

INTERFERENCE TO VIDEO

INTERFERENCE TO FM AUDIO

0 275 041

# F I G. 8

CROSSTALK [dB]

FREQUENCY [MHz]

INTERFERENCE
TO VIDEO

INTERFERENCE
TO FM AUDIO

0 275 041

# F I G.  9

# F I G. 10

CROSSTALK LEVEL [dB]

FREQUENCY [MHz]

# F I G. 11

0 275 041

# F I G. 12

0 275 041

# F I G. 13

TRACK TRAVERSE LINE

TAPE RUNNING
DIRECTION

223b

HEAD RUNNING
DIRECTION

24b

224b

224a

26

0 275 041

FIG. 14A

FIG. 14B

FIG. 14C

FIG. 14D

0 275 041

# F I G. 15A

# F I G. 15B

# FIG. 16

F I G.   17

SP MODE

| 3 | | 6 | | 9 | | 12 |
| 2 | | 5 | | 8 | |
| 1 | | 4 | | 7 | |

LP MODE

| 3 | 6 | 9 | 12 | 15 | 18 | 21 |
| 2 | 5 | 8 | 11 | 14 | 17 |
| 1 | 4 | 7 | 10 | 13 | 16 |

EP MODE

| 6 | 9 | 12 | 15 | 18 | 21 | 24 | 27 | 30 | 33 |
| 2 | 5 | 8 | 11 | 14 | 17 | 20 | 23 | 26 | 29 |
| 1 | 4 | 7 | 10 | 13 | 16 | 19 | 22 | 25 | 28 |

0          58          116          174
[$\mu$m]

0 275 041

F I G. 18

# FIG. 19

54
55
56

**AUDIO SIGNAL SWITCHING CIRCUIT** 63

57

58 **PCM AUDIO SIGNAL RECORDING DISCRIMINATING CIRCUIT** 51

59 **FM AUDIO SIGNAL RECORDING DISCRIMINATING CIRCUIT** 52

60 **DISCRIMINATION SIGNAL DETECTING CIRCUIT** 65

61 **REPRODUCTION QUALITY DETECTING CIRCUIT** 66

**SWITCHING CONTROL CIRCUIT** 62

64

# FIG. 20A

67
68
69

**SELECTION CONTROL CIRCUIT** 73

70
71
72

74
75

# FIG. 20B

76
77
78

**SELECTION CONTROL CIRCUIT** 82

79
80
81

83

# F I G. 21

0 275 041

# FIG. 22

**36 SYMBOLS**

n th BLOCK | S | I | B | P | ... | DIGITAL AUDIO DATA OR PARITY CODE | ... | PARITY (4 SYMBOLS)

SYNC. SIGNAL
ID CODE
BLOCK ADDRESS
PARITY

DIGITAL AUDIO
DATA OR
PARITY CODE

PARITY
(4 SYMBOLS)

# FIG. 24

DATA   X1 Y1 X2 Y2 X3 Y3 X4 Y4 X5 Y5

DCK

PCK

X-DATA   $X_0$ $X_1$ $X_2$ $X_3$ $X_4$

Y-DATA   $Y_0$ $Y_1$ $Y_2$ $Y_3$ $Y_4$

Q-DATA   $Q_{-1}$ $Q_0$ $Q_1$ $Q_2$ $Q_3$

I-DATA   $I_{-1}$ $I_0$ $I_1$ $I_2$ $I_3$

I'-DATA   $I_{-2}$ $I_{-1}$ $I_0$ $I_1$ $I_2$ $I_3$

q ch   $q_{-1}$ $q_0$ $q_1$ $q_2$ $q_3$

i ch   $i_{-2}$ $i_{-1}$ $i_0$ $i_1$ $i_2$ $i_3$

MODULATION OUTPUT (ENVELOPE)

# FIG. 23

0 275 041

# F I G. 25

0 275 041

# FIG. 26